# EUROPÄISCHE PATENTANMELDUNG

(11) **EP 4 545 792 A1**
(43) Veröffentlichungstag der Anmeldung: **30.04.2025**
(21) Anmeldenummer: 24204770.2
(22) Anmeldetag: 04.10.2024
(51) Int. Cl.: F04D 13/06, H02K 1/278, H02K 7/14

(54) **TEMPERIERPUMPE MIT EINEM STRUKTURIERTEN ROTORKERN**

(30) Priorität: 26.10.2023 DE 102023129592
(71) Anmelder: TI Automotive Technology Center GmbH, 76437 Rastatt (DE)
(72) Erfinder: Kom, Ivan, 67620 Soufflenheim (FR)
(74) Vertreter: Andrejewski - Honke Patent- und Rechtsanwälte Partnerschaft mbB

(57) **Zusammenfassung**

Eine Pumpe umfasst einen Stator (1) und einen Rotor (2), wobei der Rotor (2) einen Rotorkörper (3) sowie einen Rotorblock (4) aufweist und um eine Rotationsachse (A) drehbar gelagert ist. Der Rotorblock (4) weist einen metallischen Rotorkern (22) und Magnete (13) auf. Der Rotorkern (22) weist in einem Querschnitt mehrere Löcher (26) auf. Der Rotorkern (22) umfasst in einem Querschnitt auf seiner radialen Innenwand (34) mehrere Nuten (32) und mehrere Vorsprünge (33).

## Beschreibung

Die Erfindung betrifft eine Pumpe zum Antreiben eines Fluids, vorzugsweise eines Temperiermittels, insbesondere zur Verwendung in einem Fahrzeug, ganz besonders zur Verwendung zum Temperieren einer Antriebsbatterie eines Elektrofahrzeugs, wobei die Pumpe einen Stator und einen Rotor umfasst, wobei der Rotor einen Rotorkörper sowie einen Rotorblock aufweist und um eine Rotationsachse drehbar gelagert ist, wobei der Rotorblock einen metallischen Rotorkern und Magnete umfasst, wobei der Rotorkern in einem Querschnitt mehrere Löcher umfasst.

In EP 3 121 937 B1 ist eine elektrische Pumpe zur Kühlung von Fahrzeugen mit Verbrennungsmotor offenbart. Die Pumpe umfasst einen Stator und einen Rotor, wobei der Rotor seinerseits einen Rotorkörper, zwei Drehlager und einen Rotorblock umfasst. Der Rotorblock weist einen Rotorkern aus gestapelten Elektroblechen sowie Magnete auf, die an einer radialen Außenseite des Rotorkerns befestigt sind. Die Elektrobleche weisen eine Vielzahl an Löchern auf, welche einerseits der Gewichtsverringerung des Rotorkerns bzw. -block bzw. des Rotors dienen und andererseits die Magnetfeldlinien im Rotorkern führen.

Die Energie- und Mobilitätswende erfordert den Ausbau neuer Technologien, worunter insbesondere Elektrofahrzeuge mit einer Antriebsbatterie und einem Elektromotor fallen. Antriebsbatterien erreichen bei Temperaturen um 20°C die größte Effizienz, so dass sie je nach Situation erwärmt oder gekühlt werden müssen. Eine Erwärmung ist insbesondere kurz nach dem Start im Winter zweckmäßig, während eine Kühlung vor allem dann in Betracht kommt, wenn das Fahrzeug schon eine Weile gefahren ist. Insofern unterscheidet sich das Thermomanagement des Antriebsstrangs bei Elektrofahrzeugen von Verbrennungsfahrzeugen vor allem in der kalten Jahreszeit. Letztlich muss die gesamte Komponentenkette (Rohre, Schnellverbinder, Pumpen, Batteriegehäuse, etc.) des Thermomanagements bei Elektrofahrzeugen dazu ausgelegt sein, zusätzlich auch in der kalten Jahreszeit und damit ohne Unterstützung des Fahrtwinds zu arbeiten.

Dies bedeutet, dass - über das Jahr hinweg gesehen - ein relativ großer Durchsatz des Temperierfluids des Elektrofahrzeugs erforderlich ist. In der Folge muss die Pumpe entsprechend leistungsfähig ausgebildet sein. Der Erfindung liegt somit die Aufgabe zugrunde, die Pumpen für das Thermomanagement leistungsfähiger zu gestalten. Der Erfindung liegt vorzugsweise die Aufgabe zugrunde, die Steigerung der Leistungsfähigkeit nicht auf Kosten des Herstellungsaufwands oder des Materialeinsatzes zu erhöhen.

Diese Aufgabe bzw. Aufgaben wird/werden gelöst durch eine Pumpe zum Antreiben eines Fluids, vorzugsweise eines Temperiermittels, insbesondere zur Verwendung in einem Fahrzeug, ganz besonders zur Verwendung zum Temperieren einer Antriebsbatterie eines Elektrofahrzeugs, wobei die Pumpe einen Stator und einen Rotor umfasst, wobei der Rotor einen Rotorkörper sowie einen Rotorblock aufweist und um eine Rotationsachse drehbar gelagert ist, wobei der Rotorblock einen metallischen Rotorkern und Magnete umfasst, wobei der Rotorkern in einem Querschnitt mehrere Löcher umfasst, wobei der Rotorkern in einem Querschnitt auf seiner radialen Innenwand mehrere Nuten und mehrere Vorsprünge aufweist.

Der Erfindung liegt zunächst die Erkenntnis zugrunde, dass zur Steigerung der Leistungsfähigkeit der Pumpe vor allem der Rotor und insbesondere der Rotorkern weiter verbessert werden kann. Es wurde gefunden, dass die Magnetfeldlinien dazu neigen, in manchen Drehpositionen des Rotors relativ zum Stator die vorgesehenen, radial äußeren Bereiche des Rotorkerns zu verlassen. Die Magnetfeldlinien können sich dann innerhalb des Rotorkerns teilweise auch zwischen einer radialen Innenseite der Löcher und einer radialen Innenseite des Rotorkerns erstrecken. Die Streuung der Magnetfeldlinien erhöht den magnetischen Widerstand und verringert die Motoreffizienz. Die Streuflüsse sind besonders bei elektrischen Pumpen ausgeprägt, da der Abstand zwischen dem Stator und dem Rotorblock aufgrund der Trennwand, des Blockgehäuses sowie des für den Sekundärstrom vorgesehenen Ringspalts relativ groß ist, was die Streuflüsse verstärkt.

Der Erfindung liegt insbesondere die Erkenntnis zugrunde, dass eine Vermeidung bzw. eine Verringerung dieser Streuflüsse die Effizienz bzw. den Wirkungsgrad der Pumpe steigert. Es wurde gefunden, dass die Nuten auf einer radialen Innenseite des Rotorkerns die Streuflüsse zwischen den Löchern und der radialen Innenseite des Rotorkerns verringern. Hierdurch werden die magnetischen Feldlinien stärker auf den radial äußeren Bereich des Rotorkerns konzentriert, was die Effizienz bzw. den Wirkungsgrad der Pumpe erhöht. Im Ergebnis wird hierdurch die eingangs genannte Aufgabe gelöst.

Es ist bevorzugt, dass die Rotationsachse A eine axiale, eine radiale und/oder eine tangentiale bzw. Umlaufrichtung definiert. Der Ausdruck "radial innen" meint die radiale Richtung hin zu der Rotationsachse A. Der Begriff "axial einwärts" meint die axiale Richtung, die der Richtung des im Einlass strömenden Fluids entspricht. Insbesondere meint "axial einwärts" eine axiale Richtung von dem Pumpenrad in Richtung Rotorblock. Der axial äußerste Abschnitt der Pumpe ist vorzugsweise zugleich der oberste Abschnitt der Pumpe. Das dem obersten Abschnitt axial entgegengesetzte Ende der Pumpe ist der unterste Abschnitt bzw. das untere Ende. In einer Draufsicht können die Tangentialrichtungen entweder in Uhrzeigersinn oder gegen den Uhrzeigersinn verlaufen. Der Rotor dreht sich bevorzugt im Uhrzeigersinn.

Die Magnete sind vorzugsweise Permanentmagnete. Der Rotor bzw. der Rotorblock umfasst in einem Querschnitt vorzugsweise wenigstens sechs bzw. acht Magnete. Mit Vorteil umfasst der Rotor bzw. Rotorblock höchstens 20 bzw. 16 bzw. 14 Magnete im Querschnitt. Mit Vorteil ist der Rotorkern entlang seines Umfangs wenigstens abschnittsweise kreisbogenförmig. Vorzugsweise umfasst der Rotorkern an seiner radialen Außenseite Magnetplätze zur Anordnung jeweils eines Magneten auf einem Magnetplatz. Es ist sehr bevorzugt, dass die Magnete auf ihrer radialen Innenseite und/oder auf ihrer radialen Außenseite in einer Draufsicht bzw. in einen Querschnitt gesehen kreisbogenförmig ausgebildet sind. Es ist von Vorteil, dass die Magnetplätze in einer Draufsicht bzw. in einem Querschnitt eine kreisbogenförmige Kontur aufweisen und insbesondere eine zu den Magneten komplementäre Fläche aufweisen.

Es ist sehr bevorzugt, dass der Rotorkern eine Mehrzahl von übereinander gestapelten Lamellen, insbesondere Rotorblechen, aufweist. Die Rotorbleche sind vorzugsweise Elektrobleche. Es ist sehr bevorzugt, dass der Rotorkern wenigstens 10 bzw. 15 bzw. 20 Lamellen bzw. Rotorbleche umfasst. Es ist von Vorteil, dass der Rotorkern höchstens 50 bzw. 40 bzw. 30 Rotorbleche aufweist. Zweckmäßigerweise fluchtet eine Mehrzahl an Lamellen bzw. Rotorblechen über einen vollständigen Umlauf hinweg. Die Lamellen/Rotorbleche können mittels Stanzpaketieren oder mittels Backlack miteinander zu dem Rotorkern verbunden sein. Es ist von Vorteil, dass die Rotorbleche mit einer isolierenden Beschichtung versehen sind.

Gemäß einer besonders bevorzugten Ausführungsform ist die Pumpe so ausgebildet, dass das Fluid im Pumpenbetrieb das Blockgehäuse des Rotorkörpers umspült. Dies bewirkt, dass ein Sekundärstrom von der Radkammer bzw. einer Radkammer in die/einer Antriebskammer fließen kann. Über Rückführkanäle oder einen Rückführkanal kann der Sekundärstrom des Fluids dann durch den Rotor in axial auswärtiger Richtung zurück in die Radkammer fließen. Hierdurch nimmt der Sekundärstrom die Wärme von dem Stator, dem Rotor und/oder einer Platine mit, wodurch die Pumpe gekühlt und insgesamt leistungsfähiger betrieben werden kann.

Gemäß einer ganz besonders bevorzugten Ausführungsform weist der Rotorkörper bzw. das Blockgehäuse einen Kunststoff auf. Der Rotorkörper bzw. das Blockgehäuse ist mit Vorteil einstückig und vorzugsweise integral ausgebildet. Wenn der Rotorkörper integral und beispielsweise durch Spritzguss oder Umspritzen hergestellt wird, dann ist der Rotorkörper leicht und dennoch sehr stabil gebaut. Hierdurch können sehr viele Details am Rotorkörper verwirklicht werden, wovon insbesondere Rückführkanäle und Schaufeln zu nennen sind. Im Ergebnis kann der Rotorkörper günstig hergestellt werden, obwohl er ausgesprochen viele technische Details umfasst. Gleichzeitig zeichnet sich der Rotorkörper bei einer integralen Bauweise durch eine entsprechend große Robustheit aus, wodurch er relativ dünnwandig konstruiert werden kann. Dies gilt in analoger Weise auch für das Blockgehäuse.

Zweckmäßigerweise umfasst der Rotor ein Pumpenrad und/oder eine Welle. Das Pumpenrad weist mit Vorteil einen Radteller und/oder Schaufeln und/oder einen Raddeckel auf. Der Radteller ist zweckmäßigerweise gegenüber den Schaufeln axial einwärtig angeordnet. Die Schaufeln definieren in einer Draufsicht zwischen sich bevorzugt Schaufelkanäle. Es ist möglich, dass die Schaufeln in axial auswärtiger Richtung durch einen Raddeckel bedeckt sind.

Der Raddeckel kann insbesondere mittels Stecken oder Schweißen an den Schaufeln befestigt sein.

Es ist sehr bevorzugt, dass der Rotorkörper die Schaufeln und/oder den Radteller und/oder die Welle umfasst. Die Welle weist mit Vorteil einen Antriebsabschnitt und/oder einen Verbindungsabschnitt auf. Zweckmäßigerweise überlappen sich in axialer Richtung der Antriebsabschnitt und das Blockgehäuse. Gemäß einer besonders bevorzugten Ausführungsform sind das Blockgehäuse, der Antriebsabschnitt, der Verbindungsabschnitt der Radteller und/oder die Schaufeln integral miteinander verbunden und bilden bevorzugt den Rotorkörper.

Gemäß einer bevorzugten Ausführungsform wechseln sich die Nuten mit den Vorsprüngen in tangentialer Richtung ab. Es ist möglich, dass die tangentiale Ausdehnung der Nuten derjenigen der Vorsprünge entspricht. Es ist bevorzugt, dass die Innenwand des Rotorkerns ausschließlich aus den Nuten und Vorsprüngen gebildet ist. Dies bewirkt, dass möglichst große Bereiche der radialen Innenwand zur Führung der Feldlinien beitragen. Die Nuten und Vorsprünge erstecken sich bevorzugt entlang von wenigstens 50 bzw. 60 bzw. 70 bzw. 80 bzw. 90 bzw. 100 % der axialen Ausdehnung des Rotorkerns bzw. Rotorblocks. Mit Vorteil weisen die obere Decklamelle, die untere Decklamelle, die Halterlamellen und/oder die Blocklamellen die Nuten und die Vorsprünge auf. Dies bewirkt, dass möglichst große Bereiche der radialen Innenwand zur Führung der Feldlinien beitragen.

Es ist ganz besonders bevorzugt, dass die Löcher in tangentialer Richtung zu den Nuten versetzt sind. Vorzugsweise wechseln die Löcher und die Nuten einander in tangentialer Richtung ab. Es ist ganz besonders bevorzugt, dass sich die Löcher und die Nuten in tangentialer Richtung nicht überlappen. Vorteilhafterweise befinden sich in einem Querschnitt des Rotorblocks in tangentialer Richtung Freiräume zwischen den Magneten. Vorzugsweise ist wenigstens einem der Freiräume in tangentialer Richtung eine Nut zugeordnet. Mit Vorteil überlappt wenigstens einer der Freiräume mit der zugeordneten Nut in tangentialer Richtung. Besonders vorzugsweise sind der wenigstens eine Freiraum und dessen zugeordnete Nut bezüglich einer gemeinsamen Radiuslinie achssymmetrisch ausgebildet. Dies ermöglicht eine Führung bzw. räumliche Begrenzung der Feldlinien nach radial innen, wodurch das magnetische Feld kompakt und der magnetische Widerstand gering gehalten wird.

Gemäß einer besonders bevorzugten Ausführungsform entspricht in einem Querschnitt des Rotorkerns die Zahl der Magnete der Zahl der Löcher, der Nuten und/oder der Vorsprünge. Dies bewirkt die zielgerichtete Beeinflussung der magnetischen Feldlinien bezogen auf jeden Magneten. Wird jedem Magnet ein Loch zugeordnet, so kann jeder Magnet auf dieselbe Art und Weise bei der Führung der Feldlinien durch das Loch unterstützt werden. Im Ergebnis wird durch jeden Magneten praktisch derselbe Antrieb des Rotors erzielt, wodurch eine möglichst große Laufruhe erzielt wird.

Vorzugsweise ist in einem Querschnitt des Rotorkerns wenigstens einem der Magnete, vorzugsweise jedem der Magnete, des Rotorblocks - insbesondere in tangentialer Richtung - eines der Löcher und/oder einer der Vorsprünge zugeordnet. Mit Vorteil überlappt sich der wenigstens eine Magnet in tangentialer Richtung mit dem zugeordneten Loch und/oder mit dem zugeordneten Vorsprung. Vorzugsweise sind der wenigstens eine Magnet und/oder das dem Magneten zugeordnete Loch und/oder der den Magneten zugeordnete Vorsprung bezüglich einer gemeinsamen Radiuslinie achssymmetrisch ausgebildet. Die Achssymmetrie bewirkt, dass die magnetischen Felder beim Durchwandern durch den Rotorblock bzw. -kern stets möglichst ähnlich ausgebildet sind, wodurch eine große Laufruhe erreicht werden kann.

Es ist von Vorteil, wenn sich wenigstens eines der Löcher und ein dem wenigstens einen Loch in tangentialer Richtung zugeordneter Vorsprung in tangentialer Richtung überlappen. Es ist bevorzugt, dass sich sämtliche der Löcher in tangentialer Richtung mit dem jeweils zugeordneten Vorsprung in tangentialer Richtung überlappen. Vorzugsweise sind das wenigstens eine Loch und der dem Loch zugeordnete Vorsprung bezüglich einer gemeinsamen Radiuslinie achssymmetrisch ausgebildet. Es ist bevorzugt, dass eine tangentiale Ausdehnung des Vorsprungs wenigstens 50 bzw. 60 bzw. 70 bzw. 80 bzw. 90% der tangentialen Ausdehnung des Lochs entspricht. Mit Vorteil entspricht eine radiale Ausdehnung einer Nut RN einer radialen Ausdehnung eines Vorsprungs. Es ist bevorzugt, dass eine durch die radiale Ausdehnung des Vorsprungs und die tangentiale Ausdehnung des Vorsprungs gebildete Querschnittsfläche des Vorsprungs wenigstens 50 bzw. 60 bzw. 70 bzw. 80 bzw. 90% der Querschnittsfläche des zugeordneten Lochs entspricht. Dies bewirkt eine relativ gleichmäßige Verteilung des Rotorkernmaterials über einen Umlauf hinweg, wodurch elektromagnetische bzw. mechanische Ungleichmäßigkeiten verringert werden und eine Laufruhe vergrößert wird.

Idealerweise besitzen zwei der Magnete und vorzugsweise sämtliche Magnete des Rotorblocks in einem Querschnitt des Rotorkerns die gleiche Form und/oder die gleichen magnetischen Eigenschaften und/oder die gleiche radiale Position. Mit Vorteil besitzen zwei der Löcher und vorzugsweise sämtliche Löcher des Rotorkerns die gleiche Form und/oder die gleiche radiale Position. Vorzugsweise besitzen zwei der Vorsprünge und vorzugsweise sämtliche Vorsprünge der Innenwand des Rotorkerns die gleiche Form und/oder die gleiche radiale Position. Bevorzugt besitzen zwei der Nuten und vorzugsweise sämtliche Nuten der Innenwand des Rotorkerns die gleiche Form und/oder die gleiche radiale Position. Dies ermöglicht eine in tangentialer Richtung gleichmäßige bzw. sich wiederholende Ausgestaltung des Rotorblocks, wodurch eine große Laufruhe erzielt wird.

Es bevorzugt, dass eine radiale Ausdehnung RL der Löcher und eine radiale Ausdehnung RKV des Rotorkerns an einer Umlaufposition eines Vorsprungs ein Verhältnis RL/RKV von höchstens 0,80 bzw. 0,70 bzw. 0,60 bzw. 0,55 bzw. 0,50 aufweisen. Dies bewirkt, dass die Löcher im Verhältnis zur radialen Ausdehnung des Rotorkerns relativ flach ausgebildet sind. Hierdurch kann den Feldlinien in einem radial äußeren Bereich des Rotorkerns etwas mehr Platz gelassen werden, sodass die Feldlinien gut in einem radial äußeren Bereich begrenzt werden können. Es ist bevorzugt, dass ein Außenradius AR des Rotorkerns und eine radiale Ausdehnung RKN des Rotorkerns an einer Umlaufposition einer Nut ein Verhältnis von AR/RKN von wenigstens 2,0 bzw. 2,3 bzw. 2,5 bzw. 2,7 bzw. 3,0 bzw. 3,2 aufweisen. Hierdurch ist der Rotorkern in radialer Richtung im Verhältnis zum Außenradius AR bzw. Durchmesser des Rotorkerns relativ dünn bzw. schlank gehalten. Dabei kann insbesondere das Verhältnis AR/RKN umso größer ausfallen, je kleiner das Verhältnis RL/RKV ist.

Gemäß einer bevorzugten Ausführungsform weist wenigstens eine der Nuten und/oder wenigstens einer der Vorsprünge eine mehreckige und vorzugsweise viereckige Form aufweist. Mit Vorteil weisen sämtliche Nuten und/oder sämtliche Vorsprünge eine mehreckige und vorzugsweise viereckige Form auf. Diese tangential relativ gleichmäßige Form vergleichmäßigt die radial wirkenden Effekte der Nuten bzw. Vorsprünge in tangentialer Richtung. Es ist bevorzugt, dass eine tangentiale Ausdehnung der wenigstens einen Nut wenigstens um Faktor 1,5 bzw. 2,0 bzw. 2,5 größer ist als die radiale Ausdehnung der Nut. Es ist bevorzugt, dass eine tangentiale Ausdehnung des wenigstens einen Vorsprungs wenigstens um Faktor 1,5 bzw. 2,0 bzw. 2,5 größer ist als die radiale Ausdehnung des Vorsprungs. Hierdurch sind die Nut bzw. der Vorsprung in tangentialer Richtung länglich ausgebildet. Dies ermöglicht einen jeweils tangential ausreichend ausgeprägten Effekt bezogen auf die radialen Wirkungen der Vorsprünge bzw. Nuten.

Gemäß einer besonders bevorzugten Ausführungsform weist wenigstens eines der Löcher und weisen bevorzugt sämtliche Löcher des Rotorkerns in einem Querschnitt des Rotorkerns eine mehreckige und insbesondere fünfeckige Form auf. Mit Vorteil umfasst das wenigstens eine Loch eine Spitze, welche bevorzugt nach radial außen gewandt ist. Die Spitze dient vor allem dem sauberen Trennen der magnetischen Felder und somit der Vermeidung von Streuflüssen. Vorteilhafterweise umfasst das wenigstens eine Loch eine radiale Außenseite. Vorteilhafterweise stellt die Spitze des Lochs den radial äußersten Punkt der radialen Außenseite des Lochs dar. Es ist bevorzugt, dass das wenigstens eine Loch zwei tangentiale Außenseiten umfasst. Vorteilhafterweise umfasst das wenigstens eine Loch eine radiale Innenseite. Die radiale Innenseite des Lochs verbindet zweckmäßigerweise die beiden tangentialen Außenseiten des Lochs.

Gemäß einer besonders bevorzugten Ausführungsform ist wenigstens eines der Löcher und sind vorzugsweise alle Löcher der Rotorkerns mit Luft gefüllt. Es ist ganz besonders bevorzugt, dass der Rotorkern eine obere und/oder eine untere Decklamelle aufweist. Die obere und/oder untere Decklamelle besitzt vorzugsweise kein Loch. Die obere und/oder untere Decklamelle ist/sind vorteilhafterweise so ausgebildet, dass bei einem Umspritzvorgang kein Kunststoff in die Löcher des Rotorkerns fließt. Dies bewirkt eine bessere Führung der Feldlinien. Die Löcher erstrecken sich mit Vorteil über wenigstens 50 bzw. 60 bzw. 70 bzw. 80 bzw. 90 % der axialen Ausdehnung des Rotorkerns bzw. Rotorblocks.

Es ist von Vorteil, dass wenigstens eine der Nuten eine radiale Ausdehnung RN aufweist, wobei das Verhältnis RN/RKN sich vorzugsweise auf wenigstens 0,1 bzw. 0,14 bzw. 0,17 beläuft. Hierdurch wird erreicht, dass die magnetischen Feldlinien ausreichend stark begrenzt werden. Das Verhältnis RN/RKN beträgt mit Vorteil höchstens 0,60 bzw. 0,50 bzw. 0,40 bzw. 0,30 bzw. 0,25. Dies ermöglicht, dass die Feldlinien nicht zu stark begrenzt bzw. deformiert werden, sodass sich der magnetische Widerstand nicht erhöht.

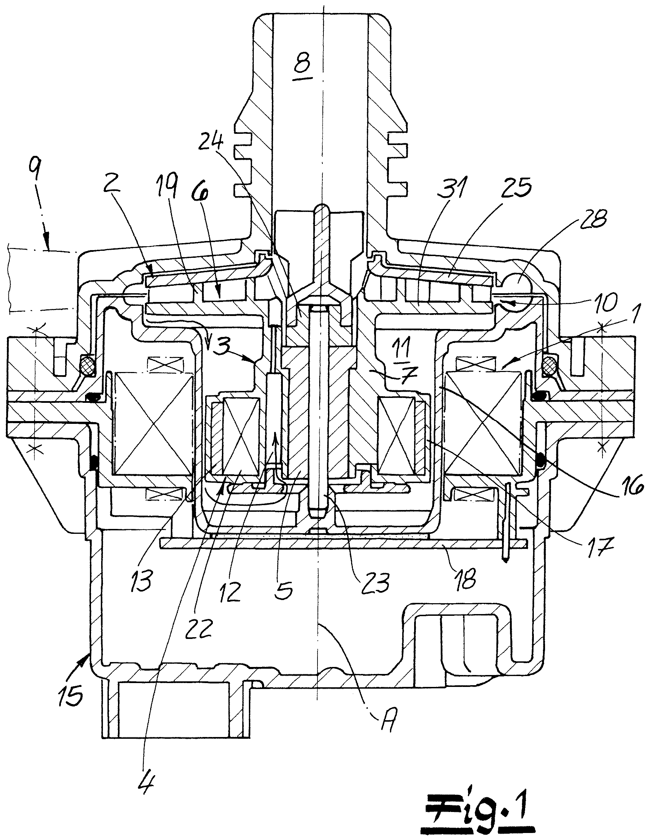

Nachfolgend wird die Erfindung anhand eines Ausführungsbeispiels mit vier Figuren erläutert. Es zeigen in schematischer Darstellung
- Figur 1: einen Längsschnitt durch eine erfindungsgemäße Pumpe und
- Figur 2: eine perspektivische Ansicht eines vereinfacht dargestellten Rotorblocks der Pumpe aus Figur 1,
- Figur 3: einen Querschnitt durch einen vereinfacht dargestellten Rotorblock aus den Fig. 1 und 2 und
- Figur 4: eine Teilansicht des Rotorblocks aus Fig. 3, allerdings zusätzlich mit einem vereinfacht dargestellten Stator.

Eine erfindungsgemäße Pumpe umfasst zweckmäßigerweise einen Einlass 8 sowie einen aufgrund des gewählten Längsschnitts gestrichelt dargestellten Auslass 9. Die Pumpe weist einen Rotor 2 auf, welcher zweckmäßigerweise ein Pumpenrad 6 umfasst. Die Pumpe weist einen Stator 1 auf, welcher einen Rotorblock 4 antreibt. Der Rotorblock 4 ist ein Bestandteil des Rotors 2. Der Rotor 2 umfasst zweckmäßigerweise eine Welle 7, welche das Drehmoment des Rotorblocks 4 auf das Pumpenrad 6 überträgt. Das Pumpenrad 6 umfasst bevorzugt Schaufeln 19 und/oder einen Radteller 31.

Die Schaufeln 19 schleudern das über den Einlass 8 hereinströmende Fluid nach radial außen, welches zweckmäßigerweise von einem Sammelkanal 28 entlang eines nahezu vollständigen Umfangs aufgesammelt wird. Der Sammelkanal 28 mündet zweckmäßigerweise in den Auslass 9. In diesem Ausführungsbeispiel ist der Fluidstrom vom Einlass 8 über das Pumpenrad 6 in den Sammelkanal 28 bis zum Auslass 9 der Hauptstrom des Fluids. Dabei bildet die Kette der Elemente 8, 6, 28, 9 einen Hauptstrompfad.

Vorzugsweise umfasst die Pumpe eine Trennwand 16 und ein Gehäuse 15. Es ist sehr bevorzugt, dass die Trennwand 16 einen Raum innerhalb des Gehäuses 15 in einen Trockenbereich und in einen Nassbereich trennt. Vorzugsweise ist der Stator 1 in dem Trockenbereich angeordnet. Mit Vorteil umfasst die Pumpe eine Platine 18 zur Steuerung des Pumpenbetriebs und insbesondere zur Steuerung des Stators 1. Es ist bevorzugt, dass die Platine 18 in dem Trockenbereich der Pumpe befindlich ist.

Der Nassbereich der Pumpe umfasst vorzugsweise den Einlass 8 und den Auslass 9. Es ist bevorzugt, dass der Nassbereich eine Radkammer 10 aufweist, innerhalb welcher das Pumpenrad 6 angeordnet ist. Zweckmäßigerweise schließt in axial einwärtiger Richtung bzw. im Längsschnitt nach unten hin an die Radkammer 10 eine Antriebskammer 11 an, welche mit Vorteil durch die Trennwand 16 gebildet wird. Es ist sehr bevorzugt, dass der Rotorblock 4 innerhalb der Antriebskammer 11 angeordnet ist.

Vorteilhafterweise ist zwischen der Trennwand 16 und dem Radteller 31 bzw. den Pumpenrad 6 ein umlaufender Spalt befindlich, durch welchen das Fluid von der Radkammer 10 in die Antriebskammer 11 strömen kann. Es ist sehr bevorzugt, dass der Rotor 2 wenigstens einen Rückführkanal 12 und vorzugsweise mehrere Rückführkanäle 12 aufweist, welcher/welche sich in etwa axialer Richtung innerhalb des Rotors 2 erstrecken und einen untersten Bereich der Antriebskammer 11 mit der Radkammer 10 verbinden.

Aufgrund der durch das Pumpenrad 6 erzeugten Druckdifferenz zwischen radial innen und radial außen strömt ein kleiner Teil des Fluids - der Sekundärstrom - von der Radkammer 10 in die Antriebskammer 11 und von dort am Rotorblock 4 vorbei bis in den untersten Bereich der Antriebskammer 11. Dann tritt der Sekundärstrom in einen unteren Eingang des Rückführkanals 12 bzw. der Rückführkanäle 12 ein, durchströmt den Rotor 2 und tritt schließlich oben in einem radial inneren Bereich der Radkammer 10 aus. Dort vermischt sich der Sekundärstrom mit dem Hauptstrom.

Der Sekundärstrom hat den Vorteil, dass die Wärme des Stators 1, des Rotorblocks 4 sowie der Platine 18 abgeführt wird, wodurch die Pumpe insgesamt effizienter arbeiten kann. Dies bedeutet allerdings zugleich auch, dass der Rotorblock 4 innerhalb eines Nassbereichs angeordnet ist und dementsprechende, technische Anforderungen an den Rotorblock 4 bzw. an den Rotor 2 zu stellen sind.

Der Rotor 2 dieses Ausführungsbeispiels umfasst einen Rotorkörper 3, welcher vorzugsweise einen Kunststoff aufweist. Der Rotorkörper 3 kann die Schaufeln 19, den Radteller 31, die Welle 7, die Rückführkanäle 12 und/oder ein Blockgehäuse 17 aufweisen. In diesem Ausführungsbeispiel ist der Rotorkörper 3 in einem Spritzguss bzw. in einer Umspritzung des Rotorblocks 4 hergestellt worden. Das Blockgehäuse 17 dieses Ausführungsbeispiels umschließt den Rotorblock 4 mit den Magneten 13 und dem Rotorkern 22 vollständig. Hierdurch wird ein sehr guter Schutz des Rotorblocks 4 vor dem Sekundärstrom gewährleistet. Gleichzeitig ist es mit der Umspritzung möglich, sehr glatte Außenoberflächen des Rotors 2 bzw. des Rotorkörpers 3 zu erzeugen, sodass der sich in dem Fluid drehende Rotor 2 gute fluiddynamische Eigenschaften aufweist.

In diesem Ausführungsbeispiel ist eine Achse 23 drehfest in einem Boden der Trennwand 16 gelagert. Die Achse 23 definiert eine Rotationssachse A, um welche sich der Rotor 2 dreht. Der Rotor 2 kann vorteilhafterweise ein Drehlager 5 aufweisen, welches in tribologischer Hinsicht optimiert sein kann und insbesondere Graphit aufweisen mag. Die Pumpe umfasst bevorzugt eine Achshalterung 24, welche in diesem Ausführungsbeispiel in eine Aufnahme einer Spinne eingepresst ist. Folglich dreht sich eine obere, axiale Stirnseite des Drehlagers 5 gegenüber einer unteren, axialen Stirnseite der Achslagerung 24. Es ist sehr bevorzugt, dass der Rotorkörper 3 durch Umspritzung des Drehlagers 5 und des Rotorblocks 4 erzeugt wird. Der Rotor 2 kann einen Rotordeckel 25 aufweisen, welcher bevorzugt auf die Schaufeln 19 gesteckt wird. An einem unteren Ende des Motors 2 kann eine Rotorkappe angeordnet sein, welche vorzugsweise erst nach der Umspritzung am Rotor 2 befestigt wird.

In diesem Ausführungsbeispiel ist das Blockgehäuse 17 integral mit der Welle 7 des Rotors 2 bzw. des Rotorkörpers 3 und vorzugsweise integral mit dem Radteller 31 und/oder den Schaufeln 19 des Pumpenrads verbunden. Diese Integrale Verbindung wird vorzugsweise mittels Umspritzung des Rotorblocks 4 erreicht.

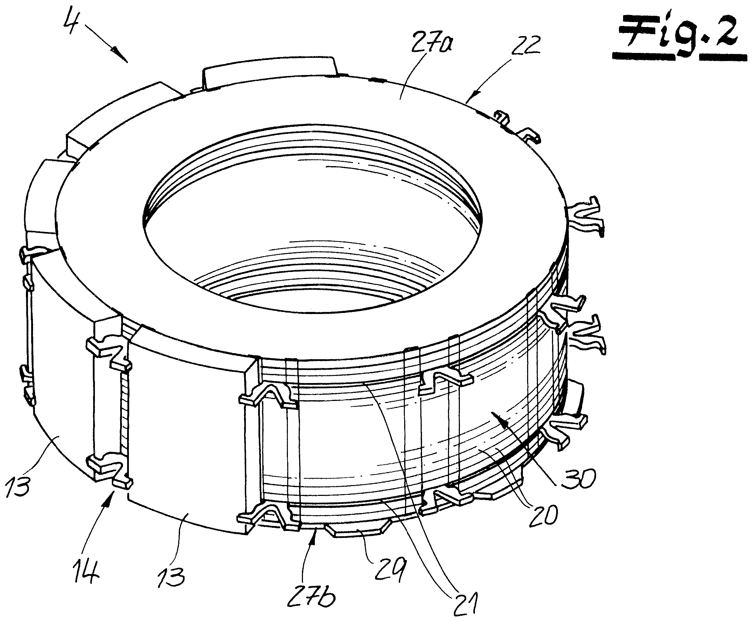

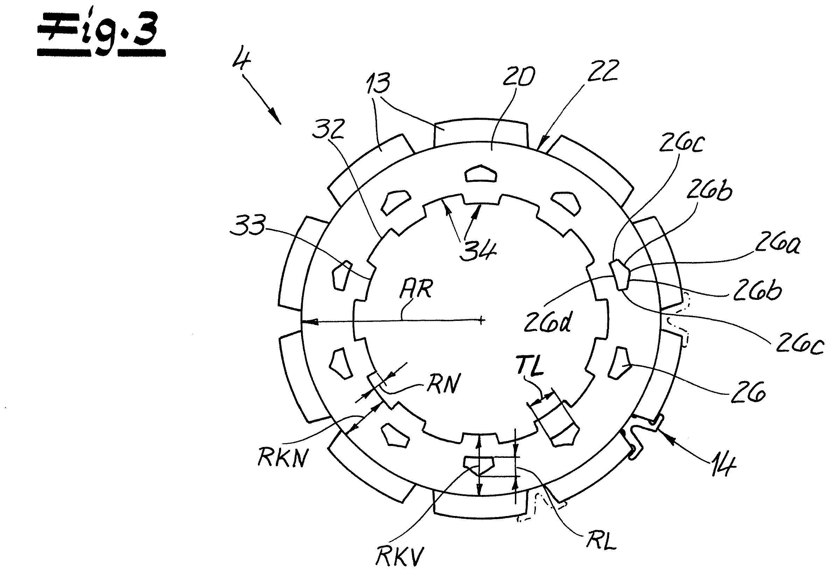

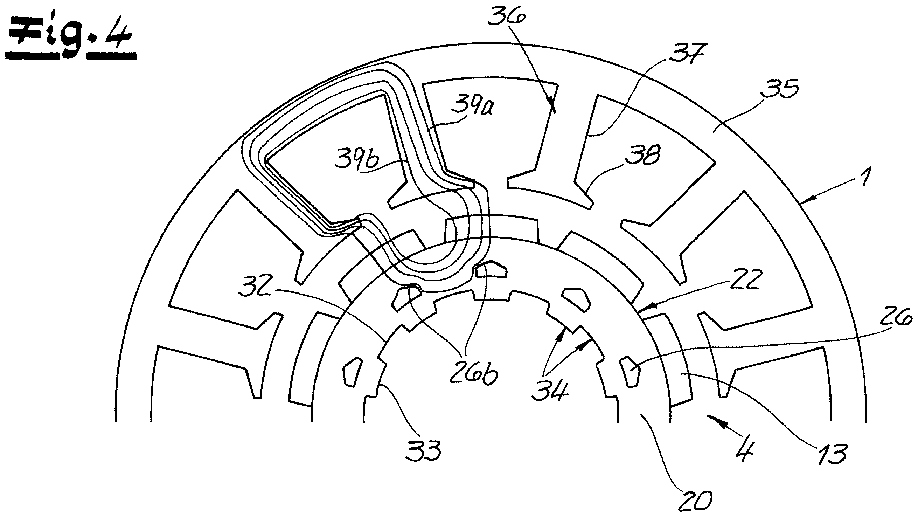

In Figur 2 ist der Rotorblock 4 bzw. Rotorkern 22 vereinfacht dargestellt, weil es hier an nicht dargestellten Nuten auf einer radialen Innenwand des Rotorkerns 22 fehlt. Diese Nuten 32 und Vorsprünge 33 sind allerdings in den Figuren 3 und 4 ersichtlich. Die Nuten 32 und Vorsprünge 33 erstrecken sich besonders vorzugsweise entlang der gesamten axialen Länge des Rotorblocks 4 bzw. des Rotorkerns 22. Mit Vorteil weisen die obere Decklamelle 27a, die untere Decklamelle27b, die Halterlamellen 21 und/oder die Blocklamellen 20 die Nuten 32 und die Vorsprünge 33 auf.

Die Magnete 13 sind bevorzugt an einer radialen Außenseite des Rotorkerns 22 angeordnet sind, s. Figur 2. Hierzu umfasst der Rotorblock 4 Magnethalter 14, welche die Magnete 13 an dem Rotorkern 22 halten. Durch die Halterung der Magnete 13 am Rotorkern 22 ist der Rotorblock 4 insgesamt ausreichend stabil für eine spätere Umspritzung.

Der Rotorkern 22 dieses Ausführungsbeispiels besteht aus 25 übereinander gestapelten Lamellen 20, 21, 27. Die Lamellen 20, 21, 27 sind vorzugsweise Elektrobleche. Die Elektrobleche sind zweckmäßigerweise mit einem isolierenden Überzug versehen, sodass Wirbelströme - insbesondere in axialer Richtung - vermieden werden. Die Lamellen 20, 21, 27 dieses Ausgangsbeispiels können mittels Stanzpaketierung oder aber mittels Backlack miteinander zu dem zusammenhängenden Rotorkern 22 verbunden werden. In diesem Ausführungsbeispiel weist der Rotorkern 22 genau zweiundzwanzig Blocklamellen 20 aus Elektroblech auf, die dieselbe Form besitzen.

Der Rotorblock 4 dieses Ausführungsbeispiels umfasst insgesamt zehn Magnete 13, welche vorzugsweise als Permanentmagnete ausgebildet sind. Der besseren Darstellbarkeit halber sind in Figur 2 jedoch lediglich fünf Magnete 13 gezeigt. Es ist bevorzugt, dass die Magnete 13 auf ihrer radialen Innenseite und/oder auf ihrer radialen Außenseite in einer Draufsicht auf den Rotorblock kreisbogenförmig ausgebildet sind. Mit Vorteil weist der Rotorkern 22 auf seiner radialen Außenseite in diesem Ausführungsbeispiel zehn Magnetplätze 30 auf, wobei jeder Magnetplatz 30 einem Magnet 13 zugeordnet ist. Vorzugsweise sind die Magnethalter 14 bzw. Magnetplätze 30 bzw. Magnete 13 zueinander in tangentialer Richtung äquidistant angeordnet.

In diesem Ausführungsbeispiel ist die unterste Lamelle als eine untere Decklamelle 27b ausgebildet. Die untere Decklamelle kann ein Elektroblech oder einen Kunststoff aufweisen. Die untere Decklamelle 27b umfasst vorzugsweise mehrere und in diesem Ausführungsbeispiel zehn Axialhalter 29. Zweckmäßigerweise ist jeder Axialhalter 29 einem Magnetplatz 30 zugeordnet. Die Axialhalter 29 sind vorzugsweise als Axialanschläge ausgebildet, sodass die Magnete 13 in axialer Richtung nach unten hin sicher am Rotorkern 22 gehalten werden. Der Rotorkern mag eine obere Decklamelle 27a aufweisen, welche bevorzugt als Blocklamelle 20 ausgebildet ist. Es ist möglich, dass die untere Decklamelle 27b nach Zusammenbau der Pumpe oberhalb der oberen Decklamelle 27a befindlich ist, so dass die Richtungskonvention der Lamellen von der obigen Richtungskonvention der Pumpe abweichen kann.

Gemäß einer besonders bevorzugten Ausgestaltung umfasst der Rotorkern 22 zwei Halterlamellen 21 bzw. eine obere Halterlamelle 21 und eine untere Halterlamelle 21. Die beiden Halterlamellen 21 dieses Ausführungsbeispiels weisen bevorzugt mehrere und vorzugsweise jeweils eine der Zahl der Magnete entsprechende Zahl an Magnethaltern 14 auf. Es ist bevorzugt, dass die Magnethalter 14 integraler Bestandteil der Halterlamelle/n 21 sind. Vorzugsweise werden die Magnethalter 14 bzw. die Halterlamelle/n 21 mittels Stanzung hergestellt. Es ist von Vorteil, dass die Halterlamelle 21 in einer oberen Hälfte bzw. einem oberen Drittel bzw. einem oberen Viertel des Rotorkerns 22 angeordnet ist. Zweckmäßigerweise ist die untere Halterlamelle 21 in einer unteren Hälfte bzw. in einem unteren Drittel bzw. in einem unteren Viertel des Rotorkerns 22 angeordnet.

In Figur 3 ist eine vereinfachte Draufsicht des Rotorblocks 4 gezeigt, weil die obere Decklamelle 27a weggelassen wurde, um eine oberste Blocklamelle 20 zum Vorschein kommen zu lassen. Die Figur 3 ist gegenüber der Figur 2 außerdem dahingehend vereinfacht, dass die Nuten an der radialen Außenwand des Rotorkerns 22 fehlen. Die Figur 3 ist gegenüber Figur 2 auch insoweit vereinfacht, als dass lediglich ein Magnethalter 14 gezeigt ist.

Der Rotorkern 22 weist erfindungsgemäß auf seiner radialen Innenwand 34 Nuten 32 und Vorsprünge 33 auf. Die Nuten 32 wechseln sich zweckmäßigerweise mit den Vorsprüngen 33 in tangentialer Richtung ab. In diesem Ausführungsbeispiel entspricht die tangentiale Ausdehnung der Nuten 32 derjenigen der Vorsprünge 33. Mit Vorteil ist der Rotorkern 22 so ausgebildet, dass die Nuten 32 und die Vorsprünge 33 sich zu der Innenwand 34 des Rotorkerns 22 ergänzen. Es ist bevorzugt, dass die Innenwand 34 des Rotorkerns 22 ausschließlich aus den Nuten 32 und Vorsprüngen 33 gebildet ist. Es ist möglich, dass eine tangentiale Ausdehnung einer der Nuten 32 einer tangentialen Ausdehnung eines benachbarten Vorsprungs 33 entspricht.

Erfindungsgemäß weist der Rotorkern 22 Löcher 26 auf. Mit Vorteil weisen die Blocklamellen und/oder die Halterlamellen die Löcher 26 auf. Es ist bevorzugt, dass die obere Decklamelle 27a und/oder die untere Decklamelle 27b keine Löcher aufweist bzw. aufweisen. Die Löcher 26 sind vorzugsweise mit Luft gefüllt. Dies wird mit Vorteil über die obere Decklamelle 27a und die untere Decklamelle 27b erreicht, welche beide keine Löcher aufweisen und die Löcher 26 der anderen Lamellen 20, 21 abdecken. Hierdurch werden die Löcher 26 während eines Umspritzungsvorgangs nicht von Kunststoff ausgefüllt.

Es ist sehr bevorzugt, dass sich die Löcher 26 in axialer Richtung über wenigstens 50 bzw. 60 bzw. 70 bzw. 80 bzw. 90 % der axialen Ausdehnung der Magnete 13 erstrecken. Es ist von Vorteil, dass sich die Nuten 32 über wenigstens 50 bzw. 60 bzw. 70 bzw. 80 bzw. 90 bzw. 95 % der axialen Ausdehnung der Magnete 13 erstrecken. Es ist sehr bevorzugt, dass die obere der Decklamelle 27a und/oder die untere Decklamelle 27b die Nuten 32 und die Vorsprünge 33 an ihrer radialen Innenseite aufweisen.

Es ist bevorzugt, dass die Zahl der Magnete 13 der Zahl der Löcher 26, der Nuten 32 und/oder der Vorsprünge 33 entspricht. Mit Vorteil ist in einem Querschnitt des Rotorkerns 22 wenigstens einem der Magnete 13 und vorzugsweise jedem der Magnete 13 - insbesondere in tangentialer Richtung - eines der Löcher 26 und/oder einer der Vorsprünge 33 zugeordnet. Vorzugsweise überlappt sich der wenigstens eine Magnet 13 in tangentialer Richtung mit dem zugeordneten Loch 26 und/oder mit dem zugeordneten Vorsprung 33. In diesem Ausführungsbeispiel überlappen sich jeweils ein Loch 26 und ein Vorsprung 33 in tangentialer Richtung. Vorzugsweise sind der wenigstens eine Magnet 13 und/oder das dem Magneten 13 zugeordnete Loch 26 und/oder der dem Magneten 13 zugeordnete Vorsprung 33 bezüglich einer gemeinsamen Radiuslinie achssymmetrisch ausgebildet.

Mit Vorteil sind die Löcher 26 in tangentialer Richtung zu den Nuten 32 versetzt. Es ist sehr bevorzugt, dass die Löcher 26 und die Nuten 32 einander in tangentialer Richtung abwechseln. Besonders vorzugsweise überlappen sich die Löcher 26 und die Nuten 32 in tangentialer Richtung nicht. Mit Vorteil überlappen sich Freiräume in tangentialer Richtung zwischen den Magneten 13 mit den Nuten 32 in tangentialer Richtung. Es ist sehr bevorzugt, dass einer der Freiräume zwischen den Magneten und eine mit diesem Freiraum in tangentialer Richtung überlappende Nut 32 bezüglich eines gemeinsamen Radius achssymmetrisch ausgebildet sind.

In diesem Ausführungsbeispiel ist wenigstens ein Loch 26 und sind vorzugsweise alle Löcher 26 mehreckig, bevorzugt wenigstens dreieckig und besonders bevorzugt fünfeckig ausgebildet. Das wenigstens eine Loch 26 umfasst vorzugsweise eine Spitze 26a, welche mit Vorteil nach radial außen gewandt ist. Es ist sehr bevorzugt, dass das wenigstens eine Loch 26 eine radiale Außenseite 26b umfasst. Vorzugsweise stellt die Spitze 26a den radial äußersten Punkt der radialen Außenseite 26b dar. In diesem Ausführungsbeispiel wird die radiale Außenseite 26b durch zwei aufeinander zulaufende Geraden gebildet, welche sich vorteilhafterweise jeweils in tangentialer und in radialer Richtung erstrecken. Vorzugsweise umfasst das wenigstens eine Loch 26 zwei tangentiale Außenseiten 26c. Mit Vorteil umfasst das wenigstens eine Loch 26 eine radiale Innenseite 26d. Die radiale Innenseite 26d verbindet zweckmäßigerweise die beiden tangentialen Außenseiten 26c.

Das wenigstens eine Loch 26 und vorzugsweise alle Löcher 26 ist/sind vorzugsweise relativ flach ausgebildet. Es ist bevorzugt, dass eine tangentiale Ausdehnung TL des wenigstens einen Lochs 26 größer ist als eine radiale Ausdehnung RL des Lochs 26. Der Rotorkern 22 (K) weist an der Stelle eines Vorsprungs 33 (V) eine radiale (R) Ausdehnung RKV auf. Es ist sehr bevorzugt, dass ein Verhältnis RL/RKV höchstens 0,70 bzw. 0,65 bzw. 0,50 beträgt. In diesem Ausführungsbeispiel mag das Verhältnis RL/RKV etwa 0,40 betragen.

Der Rotorkern ist in radialer Richtung - insbesondere im Bereich der Nuten 32-mit Vorteil relativ schlank ausgebildet. Der Rotorkern 22 (K) besitzt an einer Stelle einer Nut 32 (N) eine radiale (R) Ausdehnung RKN. Der Rotorkern 22 weist einen Außenradius AR auf. Vorzugsweise ist der Außenradius AR der arithmetisch gemittelte Wert sämtlicher Außenradien über einen vollen Umlauf hinweg. Es ist sehr bevorzugt, dass ein Verhältnis AR/RKN wenigstens 2,3 bzw. 2,7 bzw. 3,0 beträgt. In diesem Ausführungsbeispiel mag dieses Verhältnis 3,5 betragen. Eine Nut 32 (N) besitzt eine radiale (R) Ausdehnung RN. Das Verhältnis RN/RKN beläuft sich vorzugsweise auf wenigstens 0,1 bzw. 0,14 bzw. 0,17 und im Ausführungsbeispiel etwa 0,21.

In Figur 4 ist eine Teilansicht des Rotorblocks 4 aus Figur 3 dargestellt, wobei der Rotorblock 4 gegenüber Figur 3 zusätzlich noch von einem vereinfacht dargestellten Stator 1 umgeben ist. Der Einfachheit halber wurden in Figur 4 insbesondere Statorwicklungen sowie auch die Trennwand 16 weggelassen. Demzufolge entspricht der hier dargestellte Stator 1 im Wesentlichen einem Querschnitt eines Statorkerns bzw. einer Draufsicht auf eine Lamelle des Statorkerns. Der Einfachheit halber wurden auch in Figur 4 die Magnethalter 14 sowie die Nuten auf der radialen Außenseite des Rotorkerns 22 weggelassen.

Der Stator 1 bzw. Statorkern weist einen Statorring 35 und eine Mehrzahl an nach innen ragenden Polen 36 auf. Die Pole 36 umfassen zweckmäßigerweise jeweils einen Polkern 37 sowie einen Polschuh 38. Die nicht dargestellte Statorwicklung ist insbesondere in tangentialer Richtung um den Polkern 37 gewickelt und wird in Radialrichtung von dem Polschuh 38 sowie von dem Statorring 35 gehalten.

Im Betrieb der Pumpe bilden sich gemäß Figur 4 magnetische Feldlinien 39a, 39b aus. Die magnetischen Feldlinien 39a, 39b bilden einen geschlossenen Umlauf über einen ersten Polkern 37, den Statorring 35, einen zweiten Polkern 37, einen ersten Magneten 13, den Rotorkern 22 und einen zweiten Magneten 13. Im vorliegenden Fall symbolisiert die die Linie 39a eine äußere Feldlinie, während die Linie 39b eine innere Feldlinie darstellt.

In Figur 4 ist erkennbar, dass die - vorzugsweise mit Luft gefüllten - Löcher 26 eine Ausdehnung der Feldlinien 39a, 39b und insbesondere der äußeren Feldlinie 39a beeinflussen, so dass die äußere Feldlinie 39a entlang der radialen Außenseite 26b und entlang der tangentialen Außenseite 26c der Löcher 26 verläuft. Auch wird die äußere Feldlinie 39a insbesondere durch die Nut 32 nach radial innen begrenzt.

Hierdurch werden die Feldlinien 39a, 39b auf einen möglichst kleinen, äußeren Bereich innerhalb des Rotorblocks 4 bzw. Rotorkerns 22 konzentriert, wodurch ein entsprechend geringerer magnetischer Widerstand erzielt wird. Insbesondere werden durch die Löcher 26 und die Nuten 32 die Magnetfeldlinien auf einen radial äußeren Bereich des Rotorkerns 22 konzentriert und außerdem Streuflüsse vermieden. Dies ist insbesondere für Pumpen mit Trennwand und Sekundärstrom von besonderem Vorteil, weil hier der Abstand zwischen dem Stator 1 und Rotorblock 4 größer und in der Folge auch die Neigung zu Feldliniendivergenz und Streuflüssen größer ist.

**Bezugszeichenliste**

| | | | |
|---|---|---|---|
| A | Rotationsachse | 27a | Obere Decklamelle |
| 1 | Stator | 27b | Untere Decklamelle |
| 2 | Rotor | 28 | Sammelkanal |
| 3 | Rotorkörper | 29 | Axialhalter |
| 4 | Rotorblock | 30 | Magnetplatz |
| 5 | Drehlager | 31 | Radteller |
| 6 | Pumpenrad | 32 | Nut |
| 7 | Welle | 33 | Vorsprung |
| 8 | Einlass | 34 | Innenwand |
| 9 | Auslass | 35 | Statorring |
| 10 | Radkammer | 36 | Pol |
| 11 | Antriebskammer | 37 | Polkern |
| 12 | Rückführkanäle | 38 | Polschuh |
| 13 | Magnete | 39a | äußere Feldlinie |
| 14 | Magnethalter | 39b | innere Feldlinie |
| 15 | Gehäuse | AR | Außenradius |
| 16 | Trennwand | RN | radiale Ausdehnung einer Nut |
| 17 | Blockgehäuse von 2, 3 | RL | radiale Ausdehnung eines Lochs |
| 18 | Platine | | |
| 19 | Schaufel von 6 | RKN | radiale Ausdehnung des Rotorkerns an der Stelle einer Nut |
| 20 | Blocklamelle | | |
| 21 | Halterlamelle | | |
| 22 | Rotorkern | RKV | radiale Ausdehnung des Rotorkerns an der Stelle eines Vorsprungs |
| 23 | Achse | | |
| 24 | Achshalterung | | |
| 25 | Raddeckel von 2 | TL | tangentiale Ausdehnung eines Lochs |
| 26 | Loch | | |

## Patentansprüche

1. Pumpe zum Antreiben eines Fluids, vorzugsweise eines Temperiermittels, insbesondere zur Verwendung in einem Fahrzeug, ganz besonders zur Verwendung zum Temperieren einer Antriebsbatterie eines Elektrofahrzeugs,
wobei die Pumpe einen Stator (1) und einen Rotor (2) umfasst, wobei der Rotor (2) einen Rotorkörper (3) sowie einen Rotorblock (4) aufweist und um eine Rotationsachse (A) drehbar gelagert ist, wobei der Rotorblock (4) einen metallischen Rotorkern (22) und Magnete (13) umfasst,
wobei der Rotorkern (22) in einem Querschnitt mehrere Löcher (26) umfasst,
**dadurch gekennzeichnet, dass**
der Rotorkern (22) in einem Querschnitt auf seiner radialen Innenwand (34) mehrere Nuten (32) und mehrere Vorsprünge (33) aufweist.

2. Pumpe nach Anspruch 1, wobei die Pumpe so ausgebildet ist, dass das Fluid im Pumpenbetrieb ein Blockgehäuse (17) des Rotorkörpers (3) umspült.

3. Pumpe nach einem der Ansprüche 1 oder 2, wobei die Löcher (26) in tangentialer Richtung zu den Nuten (32) versetzt sind, wobei bevorzugt ist, dass die Löcher (26) und die Nuten (32) einander in tangentialer Richtung abwechseln.

4. Pumpe nach einem der Ansprüche 1 bis 3, wobei in einem Querschnitt des Rotorkerns (22) die Zahl der Magnete (13) der Zahl der Löcher (26), der Nuten (32) und/oder der Vorsprünge (33) entspricht.

5. Pumpe nach einem der Ansprüche 1 bis 4, wobei sich wenigstens eines der Löcher (26) und ein dem wenigstens einen Loch (26) in tangentialer Richtung zugeordneter Vorsprung (33) in tangentialer Richtung überlappen.

6. Pumpe nach einem der Ansprüche 1 bis 5, wobei eine radiale Ausdehnung RL der Löcher (26) und eine radiale Ausdehnung RKV des Rotorkerns (22) an einer Umlaufposition eines Vorsprungs (33) ein Verhältnis RL/RKV von höchstens 0,70 bzw. 0,65 bzw. 0,50 aufweisen.

7. Pumpe nach einem der Ansprüche 1 bis 6, wobei wenigstens eine der Nuten (32) und/oder wenigstens einer der Vorsprünge (33) eine mehreckige und vorzugsweise viereckige Form aufweist.

8. Pumpe nach einem der Ansprüche 1 bis 7, wobei wenigstens eines der Löcher (26) eine mehreckige und vorzugsweise fünfeckige Form aufweist.

9. Pumpe nach einem der Ansprüche 1 bis 8, wobei wenigstens eines der Löcher (26) mit Luft gefüllt ist.

10. Pumpe nach einem der Ansprüche 1 bis 9, wobei wenigstens eine der Nuten (32) und vorzugsweise sämtliche Nuten (32) eine radiale Ausdehnung RN aufweist/aufweisen, wobei das Verhältnis RN/RKN sich auf wenigstens 0,1 bzw. 0,14 bzw. 0,17 beläuft.
